# EUROPEAN PATENT SPECIFICATION

(11) **EP 0 691 044 B1**
(45) Date of publication and mention of the grant of the patent: **12.08.1998**
(21) Application number: 94909260.5
(22) Date of filing: 18.03.1994
(51) Int. Cl.: H01S 3/085, H01S 3/06, G02B 6/42

(54) **A LASER**
LASER
LASER

(30) Priority: 25.03.1993 EP 93302303; 04.11.1993 GB 9322703
(43) Date of publication of application: 10.01.1996
(73) Proprietor: BRITISH TELECOMMUNICATIONS public limited company, London EC1A 7AJ (GB)
(72) Inventor: KASHYAP, Raman, Suffolk IP4 3NU (GB)
(74) Representative: Roberts, Simon Christopher
(86) International application number: GB9400556
(87) International publication number: WO9422187

(56) References cited:
- EP-A- 0 435 217
- GB-A- 2 254 183
- ELECTRONICS LETTERS, vol.27, no.13, 20 June 1991, ENAGE GB pages 1115 - 1116 D.M.BIRD ET AL 'NARROW LINE SEMICONDUCTOR LASER USING FIBRE GRATING'
- REVIEW OF SCIENTIFIC INSTRUMENTS, vol.62, no.12, December 1991, NEW YORK US pages 2936 - 2939 V.A.HANDEREK ET AL. 'TWO-FREQUENCY DYE LASER WITH ACCURATELY CONTROLLABLE FREQUENCY DIFFERENCE'
- IEE PROCEEDINGS J. OPTOELECTRONICS, vol.134, no.6, December 1988, STEVENAGE GB pages 385 - 407 P.URQUHART 'REVIEW OF RARE EARTH DOPED FIBRE LASERS AND AMPLIFIERS'
- ELECTRONICS LETTERS, vol.21, no.20, 26 September 1985, ENAGE GB pages 933 - 934 K.Y.LIOU ET AL. 'NARROW-LINEWIDTH FIBRE EXTERNAL-CAVITY INJECTION LASERS'
- PATENT ABSTRACTS OF JAPAN vol. 14, no. 400 (P-1098) (4343) 29 August 1990 & JP,A,02 151 819 (MATSUSHITA ELECTRIC) 11 June 1990
- ELECTRONICS LETTERS, vol.23, no.24, 19 November 1987, ENAGE GB pages 1255 - 1257 J.R.STERN ET AL 'PASSIVE OPTICAL LOCAL NETWORKS FOR TELEPHONY APPLICATIONS AND BEYOND' cited in the application

## Description

The present invention relates to a laser, and in particular to a laser whose operating wavelength may be easily altered.

The development of compact, relatively inexpensive lasers, in particular semi-conductor lasers, but more recently also fibre lasers, has led to an enormous growth in optical communication systems. Initially lasers in optical communications systems were used simply as a source of optical frequency noise, the wavelength and bandwidth of these lasers being relatively unimportant. The parallel development of optical fibres, used as the transmission medium in these telecommunications systems, rapidly led to a requirement for lasers to operate within specific wavelength ranges. Thus it was discovered that optical fibres made from the preferred material of silica, exhibited three low loss "windows" in the optical spectrum, centred at approximately 850nm, 1300nm and 1550nm. Single wavelength point to point optical communications systems thus required laser sources whose operating wavelength lay within one of the low loss windows of the optical fibre used. These simple types of optical communications systems are the ones which are predominately in use at present in telecommunications networks, however there is a requirement for future optical communications networks to utilise the huge spectral bandwidth available from optical fibres more efficiently.

In addition to simply utilising several wavelengths on the same point to point optical communications link, there are many proposals to use hundreds, or even thousands, of different wavelengths across multipoint optical networks. Such proposals may be based on a broadband optical path approach or a wavelength selective optical path approach, or on some combination of the two approaches. A feature of the broadband approach is that any signal injected into the network is broadcast to all receivers whether it is needed or not. This may be considered inefficient but it can lead to a good degree of flexibility, and this is exploited for example by means of Passive Optical Network configurations see for example J R Stern et Al "Passive Optical Local Networks for telephony applications and beyond", Electronics Letters Volume 23, number 24, 1255-1257, November 1987. A feature of wavelength selective optical networks is that optical power at a given wavelength is directed only to where it is required and a given wavelength can be reused in different parts of the network. This leads to a reduction in the total number of different wavelengths needed for a given network throughput, but requires that wavelength multiplexing and demultiplexing components are provided in the network, see for example G R Hill "A wavelength routing approach to optical communications networks" IEEE INFOCOM '88.

The aim for both of these approaches, is to extend the optical network as far as possible to the customer, preferably supplying an optical communications link to the customer's premises.

The demands made of laser sources for such future optical communications networks are thus quite different from those placed on laser sources presently used.

It is known from Bird *et al,* "Narrow Line Semiconductor Laser Using Fibre Grating", Electronic Letters, vol. 27, no.13, pp1115-1116, 20th June 1991 that a laser structure may be formed by writing a Bragg grating into a length of optical fibre and connecting the fibre to a semiconductor laser such that the Bragg grating acts as the second facet of the laser structure. It is also known from JP-A-02151819 that the coupling efficiency of light from a semiconductor laser to an optical fibre can be stabilised by emitting the laser output onto the spherically grounded surface of an optical fibre.

According to a first aspect of the present invention there is provided a laser comprising first and second feedback elements defining a laser cavity, a gain medium within the laser cavity, a demountable optical connector and an optical waveguide, wherein the second feedback element is wavelength selective, the demountable optical connector is located between the gain medium and the second feedback element and the optical waveguide is located to direct optical radiation between the demountable optical connector and the second feedback element.

Thus the present applicant has realised that if a demountable optical connector is provided within the cavity of a laser, between the gain medium and a wavelength selective feedback element, the wavelength selective feedback element alone may be easily exchanged for another such element so as to alter simply and cheaply the operating wavelength of the laser. The use of an intra-cavity demountable optical connector allows the major components of the laser to remain in place when a change of laser operating wavelength is required, and allows what can be a relatively cheap wavelength selective optical feedback element simply to be exchanged for another such element. The provision of an optical waveguide between the demountable optical connector and the wavelength selective optical feedback element ensures that the laser cavity is easily re-established on exchanging optical feedback elements without alignment difficulties. The demountable optical connector may comprise a standard mechanical connector.

The wavelength selective feedback element may comprise any suitable reflection filter, for example a multiple dielectric layer filter, but preferably comprises a grating in an optical fibre. Such a grating may be optically written into the core of a photosensitive optical fibre by the method described in "All-fibre Narrowband Reflection Gratings at 1500nm", R Kashyap et al, Electronics Letters, 22 May 1990, Vol 26, No. 11, pp730-731.

Preferably the optical waveguide comprises an optical fibre. In this case the fibre grating may be incorporated in a short length of optical fibre, for example 1 metre, with one half of a mechanical connector provided on each end of the fibre. Such a length of optical fibre when in place in the laser thus forms both the wavelength selective optical feedback element, and part of the laser cavity. In operation, lasing would occur between the first feedback element and the fibre grating within the optical fibre. Should the operating wavelength of the laser need to be changed, the optical fibre is removed by disconnecting the intra cavity demountable optical connector, and a similar length of fibre having a fibre grating of a different pitch, and thus reflection wavelength, is connected in its place. Thus it can be appreciated that a large number of very cheap connectorised lengths of optical fibre (often called fibre pigtails) each having a fibre grating of a different pitch, can be provided to a technician responsible for operation of part of an optical network. The technician is then able quickly, cheaply, and simply to alter the operating wavelength of a laser according to the present invention in any given location.

Preferably the gain medium of the laser comprises a semiconductor laser diode. A semiconductor laser diode provides a simple, cheap, electrically pumped, reasonably broadband source of optical radiation. The wavelength selective feedback element in this case allows any wavelength within the gain bandwidth of the semiconductor laser diode to be selected as the operating wavelength of a laser according to the present invention. Advantageously the semiconductor laser diode can be mounted in a package which includes one half of a demountable optical connector. The diode and connector are aligned so that optical radiation from the diode is coupled into the waveguide leading from the optical connector to the wavelength selective optical feedback element. In this configuration the facet of the laser diode optically closest to the optical connector is anti-reflection coated, and lasing occurs between the other facet of the laser diode and the wavelength selective feedback element. The package is thus self contained, and need not be disturbed when the operating wavelength of the laser is changed by, for example exchanging one fibre pigtail connected to the package for another fibre pigtail.

Alternatively the gain medium of a laser according to the present invention may comprise a fibre doped with a suitable material to render the fibre active, e.g. a rare earth element. Suitable rare earth elements include, inter alia, erbium, neodymium, praseodymium and holmium. Materials other than the rare earth elements, e.g. semiconductors, could be used as alternatives, optionally in a colloidal distribution in the glass host of the fibre. The fibre pigtail which contains the active material could be a silica based or a fluorozirconate based glass or any other appropriate host. Hence the advantages of the present invention may be provided in combination with the known advantages of fibre lasers over semiconductor lasers. Preferably in this embodiment a first end of the doped fibre is provided with a broadband reflector, for example simply by mirroring an end of the doped fibre, or alternatively by connecting the doped fibre to a fibre loop mirror, while a second end of the doped fibre has low reflectivity, for example by being anti-reflection coated or angled and is connectorised i.e. is attached to one component of the demountable optical connector. In use lasing thus occurs between the broadband reflector and the wavelength selective feedback element, for example a grating in a fibre pigtail. In this latter case optical radiation is confined to a waveguide along the whole length of the laser cavity, thus eliminating the need for a free space to waveguide interface and simplifying alignment of the laser cavity.

Advantageously a laser according to the first, or to the second embodiment of the invention comprises a second feedback element which feeds back optical radiation at a plurality of distinct wavelengths into the laser cavity. This causes the laser to lase at a plurality of distinct wavelengths. Such multi-wavelength operation of a laser is advantageous, for example for generating wavelength combs for use in WDM networks. Clearly the use of a single multi-wavelength source at e.g. the head-end of a PON to launch optical radiation at a plurality of wavelengths into a single fibre, is preferable to the use of many single wavelength sources in conjunction with the necessary wavelength couplers.

Although multi-wavelength operation of a laser according to an embodiment of the present invention can be achieved by connecting together a plurality of fibre pigtails, each having a single fibre grating, to form the second feedback element, multi-wavelength operation is particularly simply achieved by utilising a fibre pigtail having a plurality of fibre gratings. Furthermore, since this pigtail can be easily exchanged for another pigtail having either a plurality of fibre gratings of different pitch, or for another pigtail having a single fibre grating, operation of the laser can be simply and cheaply altered, not only in wavelength, but also between multi-wavelength and single wavelength operation.

According to a second embodiment of the present invention there is provided a package comprising a container, a semiconductor laser diode, demountable optical connector means, a length of optical waveguide, and a fibre pigtail; said semiconductor laser diode having a facet furthest from the optical waveguide that is a first feedback element and a facet nearest to the optical waveguide that is adapted to have low reflectivity; a first end of said optical waveguide being held by demountable optical connector means with a second end of said optical waveguide aligned so as to receive, in use, optical radiation from said semiconductor laser diode; said fibre pigtail comprising a length of buffered optical fibre connectorised at at least one end with a component of a demountable optical connector, the fibre comprising a fibre grating that is a wavelength selective second feedback element; the fibre pigtail being connected to the first end of said optical waveguide by said demountable optical connector means so that the radiation of light by the semiconductor laser diode causes lasing to occur between the first feedback element and the wavelength selective second feedback element, the wavelength of the lasing action being changed by the exchange of the fibre pigtail for a second fibre pigtail comprising a fibre grating element with a different pitch. Additionally the optical waveguide is of sufficient length and flexibility that mechanical perturbation of the first end of the optical waveguide is substantially not transmitted to the second end of the optical waveguide. Alternatively the demountable optical connector is mounted to the container. Preferably the fibre pigtail comprises a plurality of fibre gratings, each fibre grating having a different pitch.

Embodiments of the present invention will now be described by way of example only, and with reference to the drawings in which:
Figure 1 is a schematic diagram of a package forming part of a semiconductor laser according to a first embodiment of the present invention;
Figure 2 shows a fibre pigtail having a fibre grating;
Figure 3 is the optical transmission spectrum of the fibre pigtail of Figure 2;
Figure 4 shows the output spectrum of the semiconductor laser package of Figure 1 when connected to a conventional fibre pigtail;
Figures 5a to g show the output spectrum of the semiconductor laser package of Figure 1 when connected to the fibre pigtail of Figure 2 for different drive currents;
Figures 6a and b show respectively the L/I characteristic of the laser package of Figure 1 when connected to a conventional fibre pigtail and when connected to a fibre pigtail according to the present invention as shown in Figure 2;
Figure 7 shows a superposition of five separate output spectrums from a laser according to a first embodiment of the present invention, each spectrum is obtained by utilising one of five different fibre grating pigtails according to the present invention;
Figure 8 is a schematic diagram of a package forming part of a fibre laser according to a second embodiment of the present invention.
Figure 9 shows the output spectrum of the fibre laser of Figure 8 when connected to a first fibre pigtail according to the present invention;
Figure 10 shows the output spectrum of the fibre laser of Figure 8 when connected to a second fibre pigtail according to the present invention;
Figure 11 is a schematic diagram of an alternative configuration of the second embodiment of the present invention;
Figure 12 shows the output spectrum of the fibre laser of Figure 11;
Figure 13 shows the output spectrum of a semiconductor laser according to the first embodiment of the present invention when connected to a fibre pigtail having four fibre gratings of widely differing distinct pitches;
Figure 14 shows the transmission spectrum of a fibre pigtail having two fibre gratings of slightly differing pitch; and
Figure 15 shows the output spectrum of a semiconductor laser according to the first embodiment of the present invention when connected to the fibre pigtail of Figure 14.

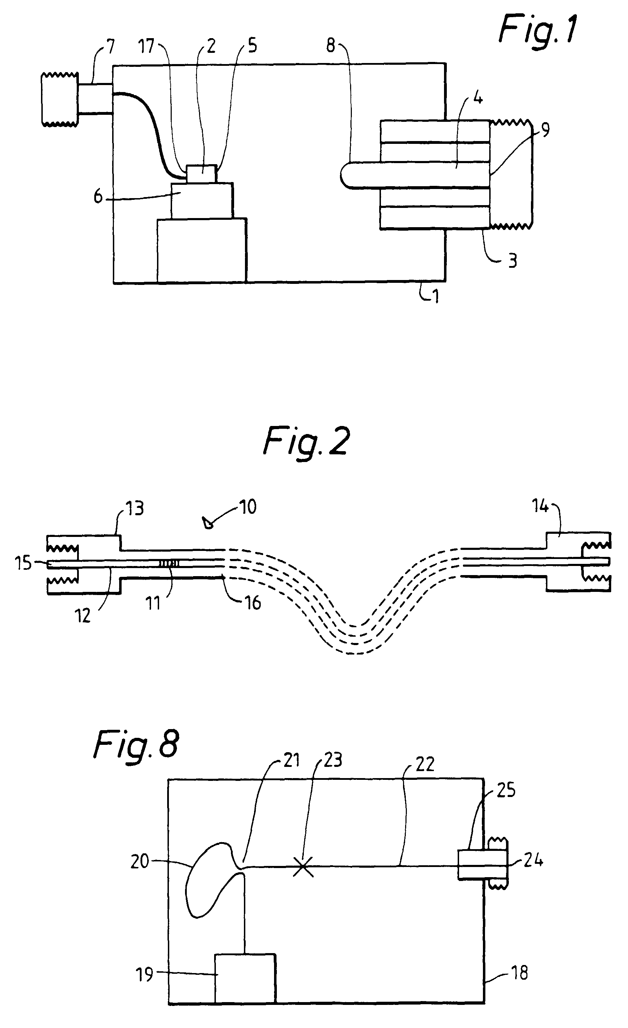

Figure 1 shows a package comprising a container 1, a semiconductor laser diode 2, a component (i.e. one half) of a demountable optical connector 3, and a length of optical fibre 4 held by the component 3. The semiconductor laser diode 2 is anti-reflection coated on its facet 5 which faces the component of the optical connector 3, the diode 2 is mounted on a heat sink 6, and electrically connected to a modulation connector 7. The optical fibre 4 has a lens 8 formed at one end, and is anti-reflection coated at the other end 9. The component of the connector 3 is mounted to the container 1 so that the fibre 4 is aligned to receive optical radiation emitted by the semiconductor laser diode 2. Figure 2 shows a ruggedised fibre pigtail 10 having a fibre grating 11. The fibre 12 is connectorised at each end with a component of a demountable optical connector 13, 14 which is able to mate with the component of the optical connector 3 of the package shown in Figure 1. The end 15 of the fibre 12 closest to the fibre grating 11 is anti-reflection coated, and the fibre 12 is protected by a buffer layer 16.

In use the fibre pigtail 10 is connected to the package shown in Figure 1 by screwing together the two components 3 and 13 of the demountable optical connector. The assembled laser lases between the uncoated facet 17 of the semiconductor laser diode 2 and the fibre grating 11 in the fibre pigtail 10. The wavelength of operation λ of the laser is determined by the pitch Λ of the grating in accordance with the following known relationship λ = 2nₑ Λ, where nₑ is the effective mode index of the mode guided by the fibre 12, which can be easily calculated by the skilled person for any particular fibre from a knowledge of the fibre refractive index profile. A range of fibre pigtails 10 having different pitch fibre gratings 11, each resulting in a different predetermined wavelength of operation λ of the laser, can thus be provided. When the wavelength of operation needs to be altered, a technician simply disconnects the optical connector 13 from the package shown in Figure 1, and replaces the fibre pigtail 10 with another pigtail giving the desired operating wavelength of the laser.

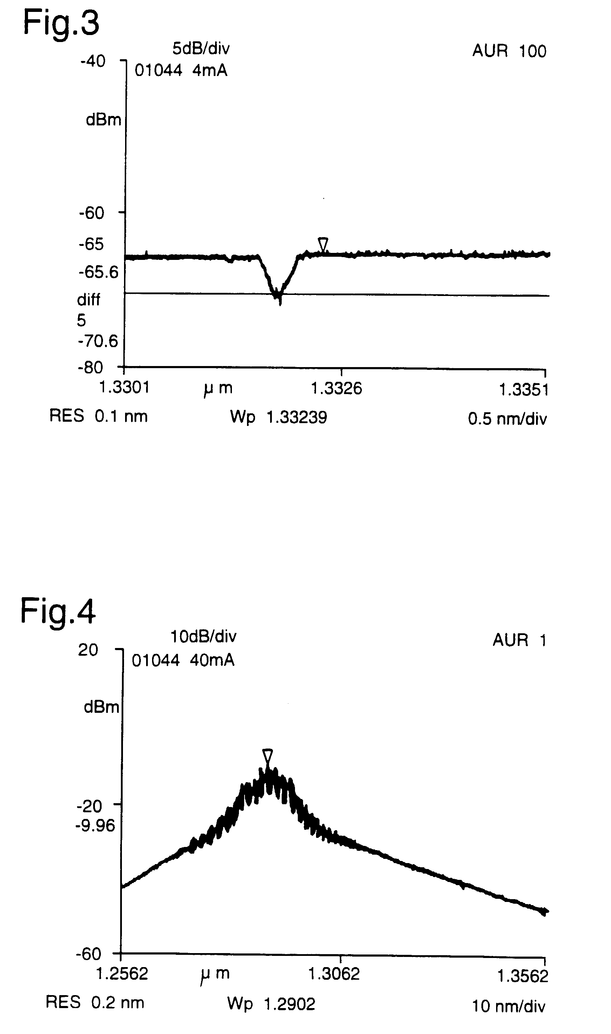

The optical transmission spectrum of a particular fibre pigtail 10, having a fibre grating 11, is shown in Figure 3. The pitch of the fibre grating 11 in this fibre pigtail 10 has been chosen so as to give a wavelength of operation of a laser of 1.32µm, and it can be seen from Figure 3 that the transmission spectrum of the fibre pigtail 10 shows a loss of approximately 5dB centred at 1.332µm.

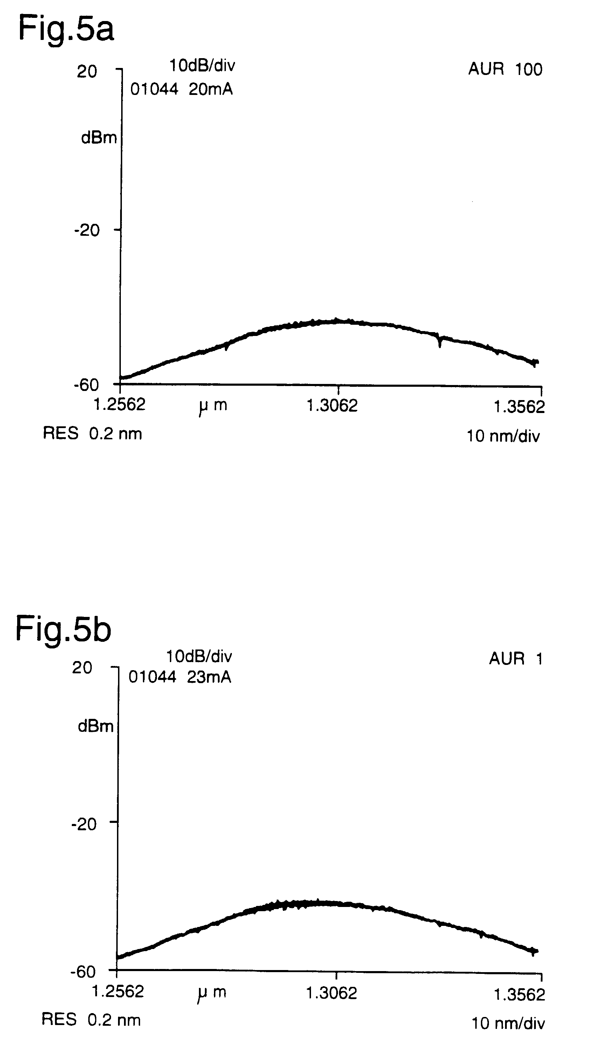

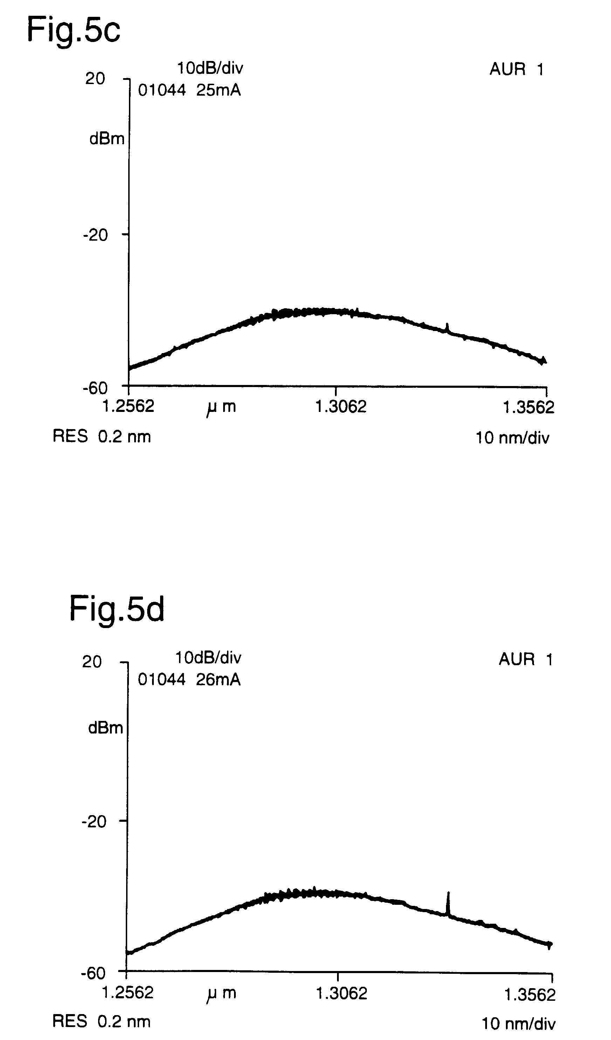

Figure 4 shows the optical output spectrum of the semiconductor laser package of Figure 1, when the laser has no wavelength selective feedback. The graph of Figure 4 has been obtained by connecting one end of a conventional fibre pigtail i.e. a pigtail not having a fibre grating 11, to the demountable optical connector 3 of the laser package, and the other end of the fibre pigtail to an optical spectrum analyser. As can be seen from Figure 4, the output spectrum is, as expected, very broad band, occupying some 30nm even at a drive current of 90mA. Figures 5a to g demonstrate how a specific operating wavelength of the laser package of Figure 1 can be chosen within this broad gain bandwidth by connecting an appropriate fibre pigtail 10, having a fibre grating 11, to the laser package. Figures 5a to g show the output spectrum of the laser package when connected to the fibre pigtail whose transmission spectrum is shown in Figure 3. The drive current for the semiconductor laser diode 2 for each of the graphs shown in Figures 5a to 5g was respectively 20, 23, 25, 26, 27, 50, and 80mA. Lasing at the reflection wavelength of the fibre grating 11 i.e. 1.332µm, can be clearly seen in Figures 5d to 5g.

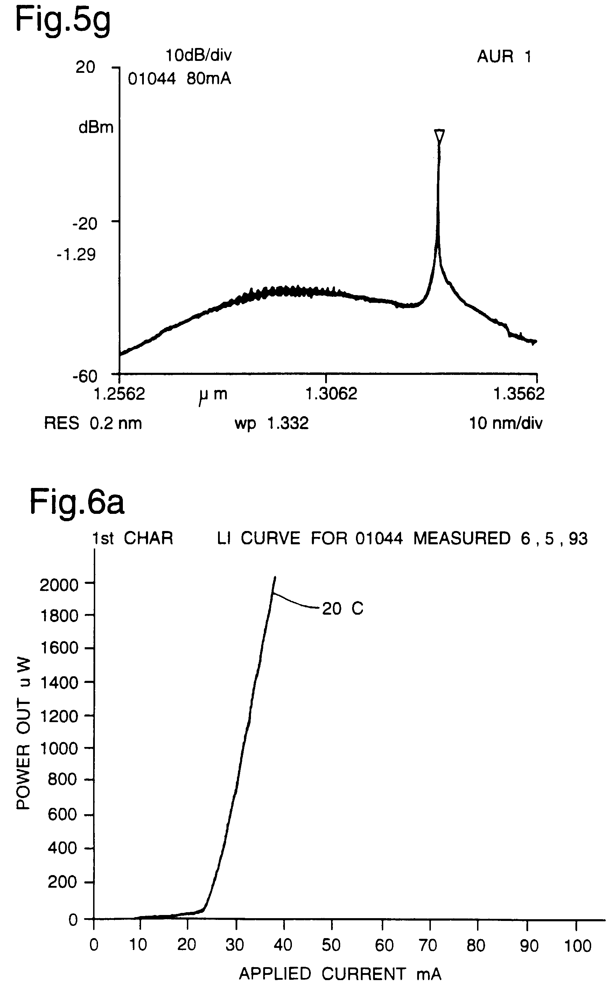

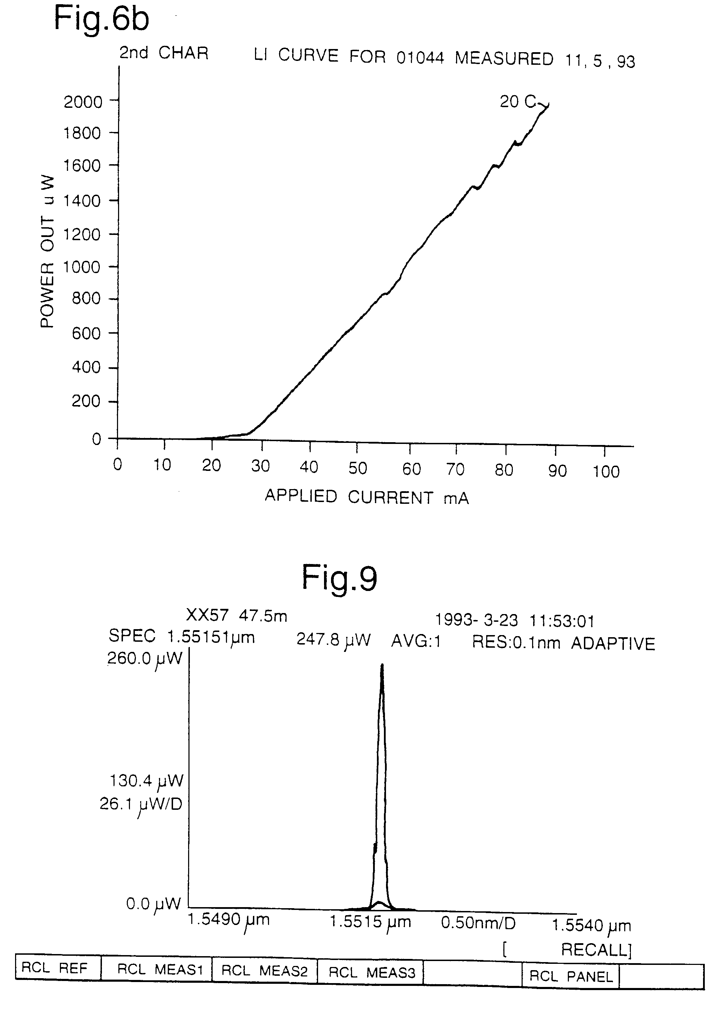

Figures 6a and b show respectively the L/I characteristic for the semiconductor laser without wavelength selective feedback, and with wavelength selective feedback. The slope efficiency of the laser is lower, and its threshold somewhat higher, when operating with wavelength selective feedback. This is because the wavelength of operation of the laser was deliberately chosen to be remote from the peak of the material gain, in order to demonstrate that lasing at such a remote wavelength could be selected.

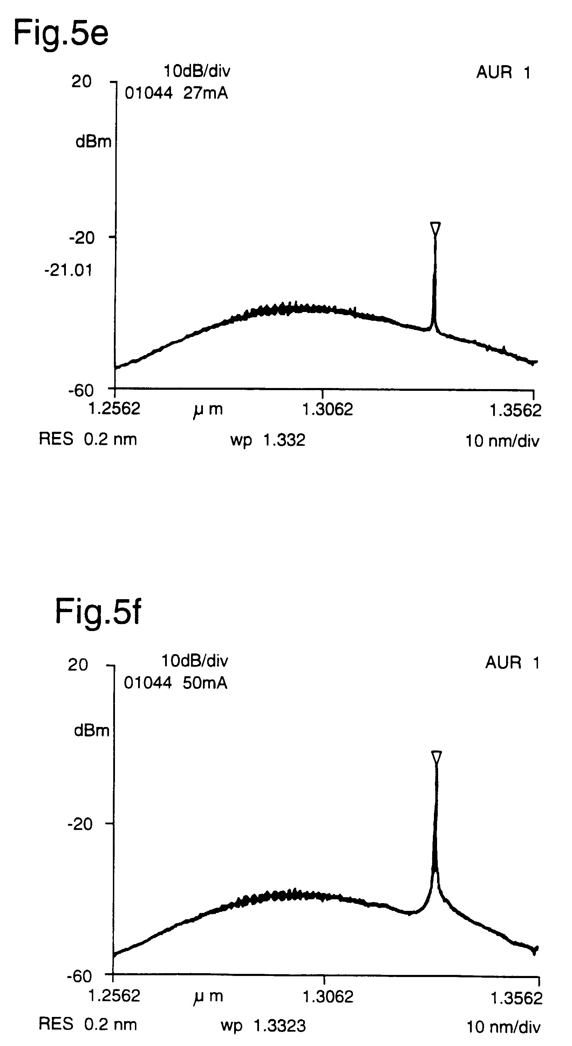

Thus from Figure 5 it can be seen that for this particular semiconductor laser device the operating wavelength can be chosen within a bandwidth of approximately 80nm, by an appropriate choice of the pitch of the fibre grating 11 of a fibre pigtail 10.

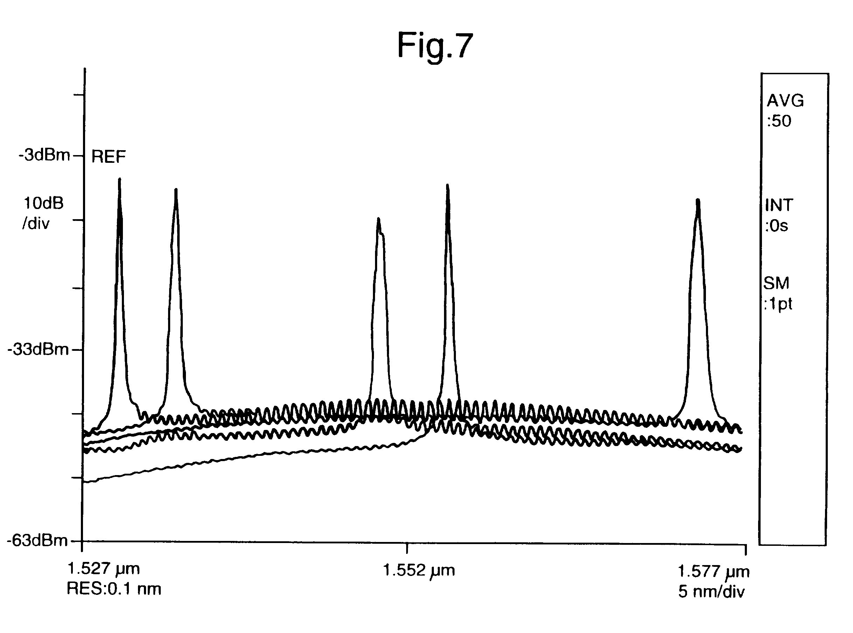

In order to demonstrate the flexibility of this approach to altering the wavelength of operation of a laser, five fibre grating reflection pigtails having reflection wavelengths in the range of 1529nm to 1573.6nm were formed. By employing one of these pigtails a semiconductor laser according to the present invention having a gain medium centred about 1550nm can be made to lase at any one of these five wavelengths. Figure 7 shows a superposition of the five separate spectrums obtained when each of the five pigtails are used. Typical grating bandwidths were 0.5nm. A sideband suppression of between 25-40dB was observed depending on the wavelength of operation.

Utilising a fibre grating pigtail having a reflection wavelength of 1.313µm, a BER (Bit Error Rate) of 10⁻⁹ was measured at 1.2Gbs⁻¹ over 50km of fibre with a receiver sensitivity of -25dBm. This BER was identical to that achieved in a back-to-back measurement.

Hence these semiconductor lasers are highly flexible, giving the possibility of single frequency operation at multi-gigabit modulation rates, due to the compact nature of the external cavity, estimated to be around 18 mm long (equivalent to a modulation rate of 5. 55 GHz).

There is a risk that the mechanical forces required to connect the demountable optical connector 13 of the fibre pigtail 10 to the component of the demountable optical connector 3 of the package shown in Figure 1, will disturb the alignment of the optical fibre 4 with the semiconductor laser diode 2. In order to avoid such a risk, rather than mounting the optical connector 3 to the container 1, the fibre 4 can be mounted directly to the container 1, and be of sufficient length that its end 9 held by connector 3 is remote from container 1. In this case any mechanical perturbation of end 9 of optical fibre 4 during connection with connector 13 will not be transmitted to the opposite end 8 of the fibre 4. This arrangement allows the attachment of fibre 4 to container 1 to be simplified, since a sub-assembly for mounting connector 3 to container 1 able to withstand the stress and strain of connectorisation is not required. Furthermore this arrangement avoids the difficulties which may be encountered in forming a lens 8 at one end, and polishing the opposite end 9, of a very short length of optical fibre 4.

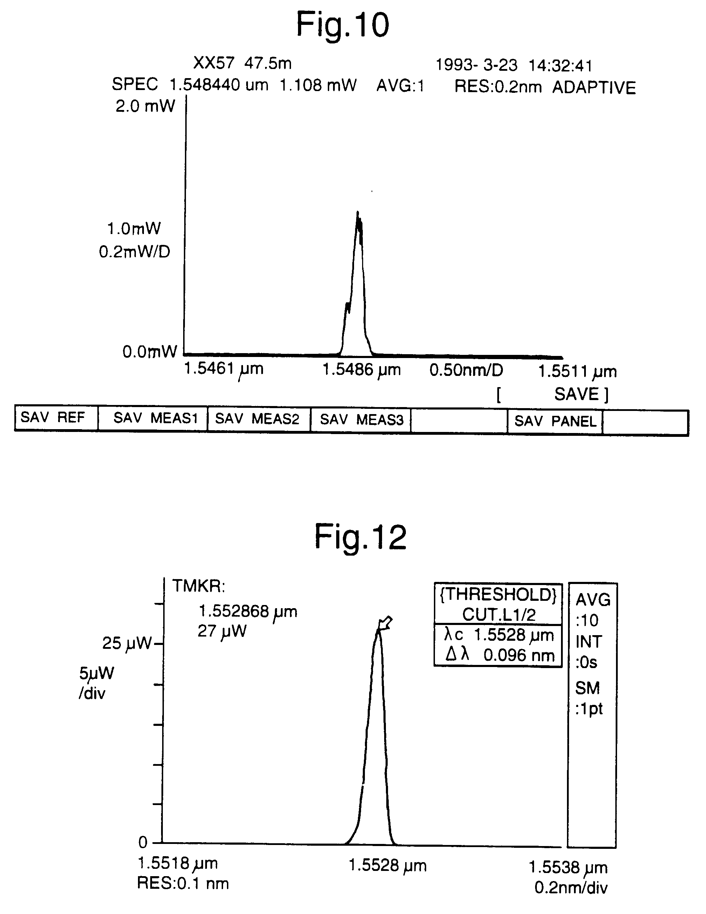

Figure 8 shows a second embodiment of the present invention in which the gain medium of the laser comprises a fibre doped with erbium. Within a container 18 is mounted a semiconductor pump device 19, which in this embodiment is a laser device, connected to a fibre loop mirror 20 formed by a WDM fused tapered coupler 21. A length of erbium doped fibre 22 is connected at one end 23 to the fibre loop mirror 20 and at the other end 24 to a component of a demountable optical connector 25, the end 24 of the erbium doped fibre 22 being anti-reflection coated. The wavelength of operation of the semiconductor diode pump 19 is in this embodiment 980nm, and the wavelength dependence of the coupling ratio of the WDM coupler 21 is chosen so that the 980nm pump radiation passes through the fibre loop mirror 20 to the erbium doped fibre 22, while radiation at the longer lasing wavelength returning from the erbium doped fibre 22 is reflected by the fibre loop mirror 20. In use, a fibre pigtail as shown in Figure 2 is connected via the optical connector 13 and 24 to the erbium doped fibre 22. Lasing then occurs between the fibre loop mirror 20 and the fibre grating 11 in the fibre pigtail 10. The operating wavelength of the laser, within the gain bandwidth of the erbium doped fibre 22, can be chosen in the same way as for the embodiment of Figure 1.

Figure 9 shows the optical output spectrum of such a fibre laser. The laser employs a half metre length of erbium doped fibre having an unpumped absorbtion of 80dB/m at 153,0nm, and a fibre pigtail 10 having a fibre grating 11 with a reflectivity centred at 1551.5nm of around 80%. A polarisation controller was used within the loop mirror to optimise the output. The laser was found to have a threshold of 15mW optical power in the fibre, and an output power at the lasing wavelength of around 0.5mW. The low power is thought to be due to the high losses in the fusion splices between highly dissimilar fibres, since no optimisation of the splice loss was attempted.

In order to demonstrate the selection of an alternative lasing wavelength within the gain bandwidth of the fibre laser, the first fibre pigtail was disconnected and a second fibre pigtail having a fibre grating with a centre wavelength of 1548.5nm was connected to the erbium doped fibre via the optical connector 13, 14. Figure 10 shows the output spectrum of the fibre laser when lasing at the operating wavelength defined by the second fibre pigtail. With 150mW optical pump power, the output power from this laser was in excess of 1mW.

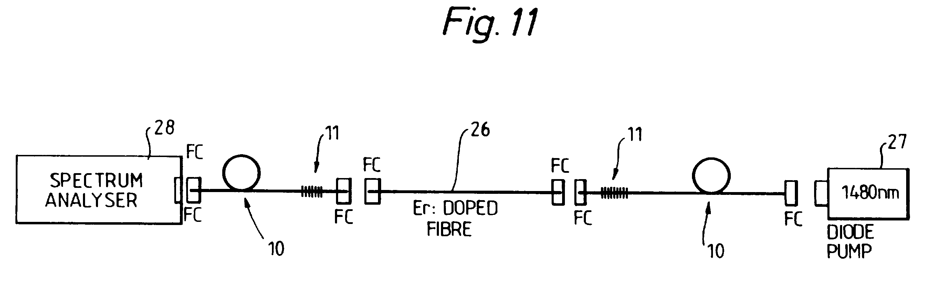

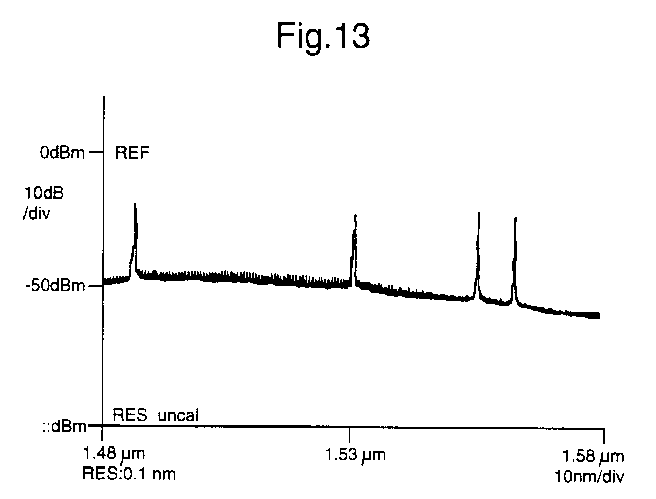

An alternative configuration of the second embodiment of the present invention, in which the gain medium comprises a rare earth doped fibre, is shown in Figure 11. Here, rather than employing one broadband reflector 20 and one narrow band reflector 11, two narrow band reflectors 11 are employed to form the laser cavity. Two fibre pigtails 10 having identical fibre reflection gratings 11 with reflectivities of ∼70% at 1552.9nm, and FC-PC connectors at each end were connected to a 15cm long length of erbium doped fibre 26. A 1480nm diode laser 27 was used to pump the fibre laser through one of the fibre grating pigtails 10. The other fibre grating pigtail 10 was connected to a spectrum analyser 28 in order to monitor the output of the laser. Figure 12 shows a typical optical spectrum of the laser of Figure 11.

An advantage of employing two narrow band reflectors 11, where these reflectors are transparent to the wavelengths other than the ones they reflect, for example as are fibre reflection gratings, is that the laser is then transparent at all wavelengths other than the wavelength, or wavelengths, at which it is lasing. Such a laser could thus for example be employed in a transparent optical network to input an additional wavelength into the network, while allowing wavelengths already present in the network to pass through the laser unaffected.

The second embodiment of the present invention can utilise a silica or fluorozirconate fibre and the dopant type and the operating wavelength of the pump source can each be selected in accordance with the desired operational wavelength of the laser. Additionally or alternatively, the broadband feedback element which, in Figure 3, is provided by the fibre loop mirror, can be provided by some alternative means, for example discrete optics or a reflective coating or the like.

The fibre pigtails of the invention should be chosen to be compatible with any transmission fibre with which the laser according to the invention is to be used. That is, the core size and/or mode field radius of the fibre pigtail should be a reasonable match for that/those of any associated transmission fibre. Both single mode and multimode fibre pigtails could be provided, either for all grating types (i.e. pitch/wavelength) or for only some grating types. The fibre pigtails for use with this invention will preferably be labelled, or otherwise (by sleeving colour, etc) distinguished, so that the operating wavelength of the grating in any particular system is clearly identifiable in the field.

A further alternative, which is in effect a variant of the second embodiment, involves providing both a gain medium and the second feedback element in the fibre pigtail, the pump 19 and the broadband reflector 20 being housed in container 18. Typically in such an arrangement, no gain medium would be included in the optical path, within the container 18, between the reflector 20 and the connector 25, although it would be possible to include such a gain medium. The gain medium within the fibre pigtail 10 would typically be located apart from the grating 11, the gain material being provided between the connector 13, which mates with the connector part 25 on the housing 18, and the grating 11. However it is possible to provide a distributed feedback effect for the laser by co-locating the grating 11 and the gain medium.

In such arrangements the grating 11 and the gain medium could be provided in different hosts, for example a fluorozirconate glass host for the gain medium and a germania silica glass host for the grating, the different glass fibres being spliced or otherwise joined in any known manner.

A multi-wavelength laser can be achieved according to an embodiment of the present invention simply by utilising a fibre pigtail 10 having a plurality of fibre gratings 11. Such a pigtail 10 has been constructed having four gratings 11 of different pitch Λ, chosen so as to give simultaneous lasing at four wavelengths across a broad wavelength range. This pigtail 10 was connected to the semiconductor package of Figure 1, and the output spectrum of the resulting multi-wavelength laser is shown in Figure 13. Figure 13 shows simultaneous lasing at four distinct laser wavelengths. The shortest and longest wavelengths are separated by more than 70nm.

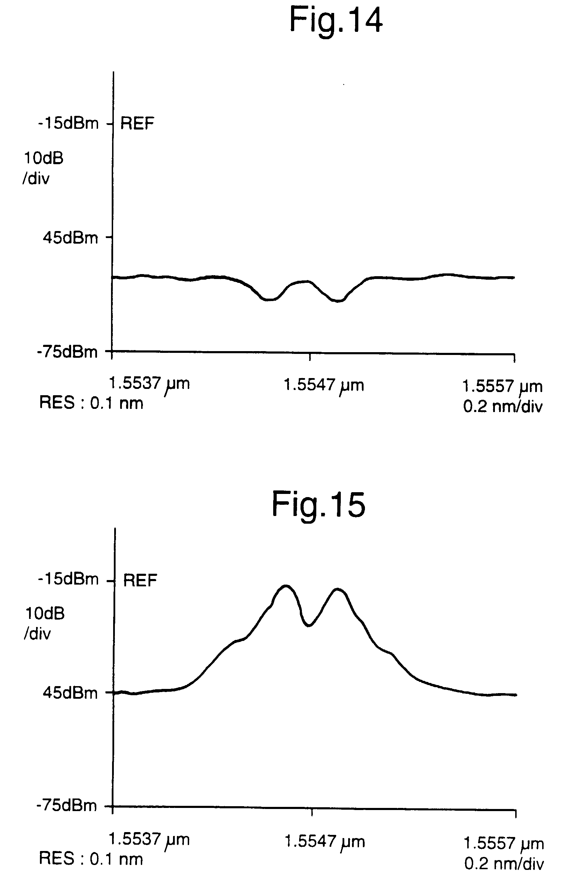

A further fibre pigtail 10 was constructed having two fibre gratings 11 of slightly differing pitch Λ, chosen so as to give simultaneous lasing at two closely spaced wavelengths. Figure 14 shows the output spectrum of a laser comprising the semiconductor package of Figure 1 and the pigtail having two gratings, when the laser is running below its threshold, and is thus indicative of the transmission spectrum of the fibre pigtail. From Figure 14 it can be seen that the stop bands of the two fibre gratings overlap somewhat, so that there is always some radiation fed back to the laser cavity at all wavelengths between the two centre wavelengths of the fibre gratings. It is for this reason that the output spectrum shown in Figure 15 has some overlap between the two lasing modes. Figure 15 shows the output spectrum of this laser when above threshold, and demonstrates simultaneous lasing at two wavelengths less than 0. 3nm apart.

For all of the embodiments of the present invention it is desirable that the fibre pigtail be terminated with different connector types at each end,that is either a male connector at one end and a female connector at the other, and/or different configuration and/or size at each end.

Although embodiments of the present invention have been described in particular for use in optical telecommunications systems, the skilled person will realise that the present invention also has particular application to optical testing equipment, or any other optical equipment, in which there is a requirement to select, cheaply and simply, a wavelength of operation within the gain bandwidth of a gain medium.

It will further be appreciated that other optical components may be incorporated into the fibre pigtail, for example optical isolators.

## Claims

1. A laser comprising first and second feedback elements (17, 11) defining a laser cavity, a gain medium within the laser cavity, a demountable optical connector (3, 13) and an optical waveguide, wherein the second feedback element (11) is wavelength selective, the demountable optical connector (3, 13) is located between the gain medium and the second feedback element, and the optical waveguide (4) is located to direct optical radiation between the demountabie optical connector (3, 13) and the second feedback element (11), the demountable optical connector allowing the second feedback element to be exchanged, thus allowing the wavelength of operation of the laser to be changed.

2. A laser as claimed in claim 1, wherein the wavelength selective feedback element (11) comprises a fibre grating.

3. A laser as claimed in claim 1 or 2, wherein the optical waveguide (4) comprises an optical fibre.

4. A laser as claimed in any preceding claim, wherein the first and second feedback elements (17, 11) are both wavelength selective.

5. A laser as claimed in claim 4, wherein the first and second feed back elements (17, 11) are substantially transparent at all optical wavelengths other than the wavelengths at which they feed back optical radiation.

6. A laser as claimed in any preceding claim, wherein the second feedback element (11) feeds back optical radiation at a plurality of distinct wavelengths into the laser cavity, so that the laser, in use, lases at said plurality of distinct wavelengths.

7. A laser as claimed in claim 6, wherein the second feedback element (11) comprises a plurality of fibre gratings.

8. A laser as claimed in any preceding claim, wherein the gain medium comprises a semiconductor laser diode (2).

9. A laser as claimed in claim 8, wherein the first feedback element (17) is provided by a first facet of the semiconductor laser diode (2), and a second facet (5) of the semiconductor laser diode is anti-reflection coated.

10. A laser as claimed in any one of claims 1 to 7, wherein the gain medium comprises a fibre (22) doped with a rare earth element.

11. A laser as claimed in claim 10, wherein a first end of the doped fibre (22) is provided with a broadband reflector comprising the first feed back element and a second end of the doped fibre has low reflectivity and is connected to a component of the demountable optical component.

12. A package comprising a container (1), a semiconductor laser diode (2), demountable optical connector means (3) and a length of optical waveguide (4);
said semiconductor laser diode (2) having a facet furthest from the optical waveguide (4) that is a first feedback element (17) and a facet nearest to the optical waveguide (4) that is adapted to have low reflectivity (5);
a first end of said optical waveguide (4) being held by the demountable optical connector means (3) with a second end of said optical waveguide (4) aligned so as to receive, in use, optical radiation from said semiconductor laser diode (2), the demountable optical connector means being suitable for demountable connection with a wavelength selective second feedback element for forming a laser cavity with the first feedback element.

13. A package comprising a container (1), a semiconductor laser diode (2), demountable optical connector means (3), a length of optical waveguide (4), and a fibre pigtail (10);
said semiconductor laser diode (2) having a facet furthest from the optical waveguide (4) that is a first feedback element (17) and a facet nearest to the optical waveguide (4) that is adapted to have low reflectivity (5);
a first end of said optical waveguide (4) being held by the demountable optical connector means (3) with a second end of said optical waveguide (4) aligned so as to receive, in use, optical radiation from said semiconductor laser diode (2);
said fibre pigtail (10) comprising a length of buffered optical fibre connected at at least one end with a component of a demountable optical connector (13), the fibre comprising a fibre grating, having a first wavelength selectivity, to provide a wavelength selective second feedback element (11);
the fibre pigtail being demountably connected to the first end of said optical waveguide by said demountable optical connector means (13) so that, in use, the radiation of light by the semiconductor laser diode (2) causes lasing to occur between the first feedback element and the wavelength selective second feedback element, the wavelength(s) of the lasing action being changeable by the exchange of the fibre pigtail (10) for a second fibre pigtail comprising a fibre grating element having a different wavelength selectivity.

14. A package as claimed in either claim 12 or claim 13, wherein the optical waveguide (4) is of sufficient length and flexibility that mechanical perturbation of the first end of the optical waveguide is substantially not transmitted to the second end of the optical waveguide.

15. A package as claimed in either claim 12 or claim 13, wherein the demountable optical connector (3) is mounted to the container (1).

16. A package as claimed in any of claims 13-15 wherein the fibre pigtail (10) comprises a plurality of fibre gratings, each fibre grating having a different pitch.

17. A fibre pigtail for use in a laser according to any one of claims 1-11, comprising a length of optical fibre (12) protected by a buffer layer (16) and connected at at least one end with a component of a demountable optical connector (13), the fibre comprising a fibre grating (11) suitable for use as the wavelength selective second feedback element in said laser.

18. A fibre pigtail as claimed in claim 17, wherein the fibre (12) comprises a plurality of fibre gratings (11), each fibre grating having a different pitch.

19. A telecommunications network having optical fibre transmission paths and a plurality of lasers optically coupled to said transmission paths, characterised in that each of said plurality of lasers comprises a laser according to any one of claims 1 to 11.

20. A telecommunications network as claimed in claim 19 wherein each of said plurality of lasers comprises first and second demountable optical connector means, the first optical connector means being located between the gain medium and the second feedback element, and the second optical connector means being located between the second feedback element and a transmission fibre which provides one of the optical fibre transmission paths of said network.

## Patentansprüche

1. Laser mit ersten und zweiten Rückkopplungsvorrichtungen (17, 11), die einen Laserresonator bilden, einem Verstärkungsmedium im Laserresonator, einem demontierbaren optischen Anschluß (3, 13) und einem optischen Wellenleiter, wobei die zweite Rückkopplungsvorrichtung (11) wellenlängenselektiv ist und der demontierbare optische Anschluß (3, 13) zwischen dem Verstärkungsmedium und der zweiten Rückkopplungsvorrichtung angeordnet ist, wobei der optische Wellenleiter derart angeordnet ist, daß er optische Strahlung zwischen dem demontierbaren optischen Anschluß (3, 13) und der zweiten Rückkopplungsvorrichtung (11) leitet, wobei es der zweiten Rückkopplungsvorrichtung durch den demontierbaren optischen Anschluß möglich ist, ausgetauscht zu werden, so daß die Betriebswellenlänge des Lasers geändert werden kann.

2. Laser nach Anspruch 1, wobei die wellenlängenselektive Rückkopplungsvorrichtung (11) ein Fasergitter aufweist.

3. Laser nach Anspruch 1 oder 2, wobei der optische Wellenleiter (4) eine optische Faser aufweist.

4. Laser nach einem der vorherigen Ansprüche, wobei die ersten und zweiten Rückkopplungsvorrichtungen (17, 11) beide wellenlängenselektiv sind.

5. Laser nach Anspruch 4, wobei die ersten und zweiten Rückkopplungsvorrichtungen (17, 11) im wesentlichen bei allen Wellenlängen durchlässig sind, außer bei den Wellenlängen, bei denen sie optische Strahlung rückkoppeln.

6. Laser nach einem der vorherigen Ansprüche, wobei die zweite Rückkopplungsvorrichtung (11) optische Strahlung bei mehreren verschiedenen Wellenlängen in den Laserresonator rückkoppelt, so daß der Laser im Betrieb bei diesen mehreren verschiedenen Wellenlängen lasert.

7. Laser nach Anspruch 6, wobei die zweite Rückkopplungsvorrichtung (11) mehrere Fasergitter aufweist.

8. Laser nach einem der vorherigen Ansprüche, wobei das Verstärkungsmedium eine Halbleiter-Laserdiode (2) aufweist.

9. Laser nach Anspruch 8, wobei die erste Rückkopplungsvorrichtung eine erste Kristallfläche der Halbleiter-Laserdiode (2) aufweist, wobei eine zweite Kristallfläche der Halbleiter-Laserdiode antireflektierend beschichtet ist.

10. Laser nach einem der Ansprüche 1 bis 7, wobei das Lasermedium eine Faser aufweist, die mit einem Seltenen Erden-Element dotiert ist.

11. Laser nach Anspruch 10, wobei ein erstes Ende der dotierten Faser (22) einen Breitbandreflektor aufweist, der die erste Rückkopplungsvorrichtung aufweist, wobei ein zweites Ende der dotierten Faser eine geringe Reflektivität aufweist und an eine Vorrichtung der demontierbaren optischen Vorrichtung angeschlossen ist.

12. Gehäuse mit einem Behälter (1), einer Halbleiter-Laserdiode (2), einem demontierbaren optischen Anschluß (3) und einem optischen Wellenleiter mit einer gewissen Länge (4),
wobei die Halbleiter-Laserdiode (2) eine Kristallfläche aufweist, die weiter entfernt von dem optischen Wellenleiter (4) angeordnet ist und eine erste Rückkopplungsvorrichtung (17) ist und eine Kristallfläche aufweist, die näher an dem optischen Wellenleiter (4) angeordnet ist und eine geringe Reflektivität (5) aufweist;
wobei ein erstes Ende des optischen Wellenleiters (4) von der demontierbaren optischen Anschlußvorrichtung (3) gehalten wird, wobei ein zweites Ende des optischen Wellenleiters (4) angeordnet ist, um im Betrieb optische Strahlung von der Halbleiter-Laserdiode (2) zu empfangen, wobei die demontierbare optische Anschlußvorrichtung demontierbar mit einer zweiten wellenlängenselektiven Rückkopplungsvorrichtung verbunden werden kann und somit mit der ersten Rückkopplungsvorrichtung einen Laserresonator bildet.

13. Gehäuse mit einem Behälter (1), einer Halbleiter-Laserdiode (2), einer demontierbaren optischen Anschlußvorrichtung (3), einem optischen Wellenleiter (4) mit einer gewissen Länge und einem Faseranschlußkabel (10),
wobei die Halbleiter-Laserdiode (2) eine Kristallfläche aufweist, die weiter von dem optischen Wellenleiter (4) angeordnet ist und eine erste Rückkopplungsvorrichtung (17) ist und eine Kristallfläche aufweist, die näher am optischen Wellenleiter (4) angeordnet ist und eine geringe Reflektivität (5) aufweist;
wobei ein erstes Ende des optischen Wellenleiters (4) von der demontierbaren optischen Anschlußvorrichtung (3) gehalten wird, wobei ein zweites Ende des optischen Wellenleiters (4) angeordnet ist und im Betrieb optische Strahlung von der Halbleiter-Laserdiode (2) empfängt;
wobei das Faseranschlußkabel (10) einen Abschnitt gepufferter optischer Faser aufweist, das wenigstens an einem Ende mit einer Vorrichtung eines demontierbaren optischen Anschlusses (13) verbunden ist, wobei die Faser ein Fasergitter aufweist, das bei einer ersten Wellenlänge selektiv ist und eine zweite wellenlängenselektive Rückkopplungsvorrichtung (11) liefert;
wobei das Faseranschlußkabel auswechselbar mit der demontierbaren optischen Anschlußvorrichtung (13) so an das erste Ende des optischen Wellenleiters angeschlossen ist, daß im Betrieb die von der Halbleiter-Laserdiode (2) emittierte Lichtstrahlung eine Laserung zwischen der ersten Rückkopplungsvorrichtung und der zweiten wellenlängenselektiven Rückkopplungsvorrichtung induziert, wobei die Wellenlänge(n) der Laserung durch den Austausch des Faseranschlußkabels (10) für ein zweites Faseranschlußkabel mit einer Fasergittervorrichtung, die bei einer anderen Wellenlänge selektiv ist, veränderbar sind.

14. Gehäuse nach entweder Anspruch 12 oder 13, wobei der optische Wellenleiter (4) lang genug ist und eine genügende Flexibilität aufweist, daß mechanische Störungen am ersten Ende des optischen Wellenleiters im wesentlichen nicht an das zweite Ende des optischen Wellenleiters übertragen werden.

15. Gehäuse nach entweder Anspruch 12 oder 13, wobei der auswechselbare optische Anschluß (3) an dem Behälter (1) befestigt ist.

16. Gehäuse nach einem der Ansprüche 13 bis 15, wobei das Faseranschlußkabel (10) mehrere Fasergitter aufweist, die jeweils einen unterschiedlichen Gitterabstand haben.

17. Faseranschlußkabel zur Verwendung in einem Laser nach einem der Ansprüche 1 bis 11, mit einem Abschnitt optischer Faser (12), die durch eine Pufferschicht (16) geschützt ist und wenigstens an einem Ende mit einer Vorrichtung eines demontierbaren optischen Anschlusses (13) verbunden ist, wobei die Faser ein Fasergitter (11) aufweist, das als wellenlängenselektive zweite Rückkopplungsvorrichtung in dem Laser verwendet werden kann.

18. Faseranschlußkabel nach Anspruch 17, wobei die Faser (12) mehrere Fasergitter (11) aufweist, die jeweils unterschiedliche Gitterabstände haben.

19. Telekommunikationsnetzwerk mit optischen Faserübertragungsstrecken und mehreren Lasern, die optisch an die Übertragungsstrecken angekoppelt sind, dadurch gekennzeichnet, daß jeder der Laser einen Laser nach einem der Ansprüche 1 bis 11 aufweist.

20. Telekommunikationsnetzwerk nach Anspruch 19, wobei jeder der Laser eine erste und zweite auswechselbare optische Anschlußvorrichtung aufweist, wobei die erste optische Anschlußvorrichtung zwischen dem Verstärkungsmedium und der zweiten Rückkopplungsvorrichtung angeordnet ist, und wobei die zweite optische Anschlußvorrichtung zwischen der zweiten Rückkopplungsvorrichtung und einer Übertragungsfaser angeordnet ist, die eine der optischen Faserübertragunsstrecken des Netzwerkes bildet.

## Revendications

1. Laser comprenant des premier et second éléments de contre-réaction (17, 11) définissant une cavité de laser, un milieu de gain à l'intérieur de la cavité du laser, un connecteur optique démontable (3, 13) et un guide d'onde optique, dans lequel le second élément de contre-réaction (11) est sélectif en longueur d'onde, le connecteur optique démontable (3, 13) est situé entre le milieu de gain et le second élément de contre-réaction, et le guide d'onde optique (4) est situé de façon à diriger le rayonnement optique entre le connecteur optique démontable (3, 13) et le second élément de contre-réaction (11), le connecteur optique démontable permettant que le second élément de contre-réaction soit échangé, en permettant ainsi que la longueur d'onde de fonctionnement du laser soit modifiée.

2. Laser selon la revendication 1, dans lequel l'élément de contre-réaction sélectif en longueur d'onde (11) comprend un réseau de diffraction de fibre.

3. Laser selon la revendication 1 ou 2, dans lequel le guide d'onde optique (4) comprend une fibre optique.

4. Laser selon l'une quelconque des revendications précédentes, dans lequel les premier et second éléments de contre-réaction (17, 11) sont tous deux sélectifs en longueur d'onde.

5. Laser selon la revendication 4, dans lequel les premier et second éléments de contre-réaction (17, 11) sont pratiquement transparents pour toutes les longueurs d'onde optiques autres que les longueurs d'onde auxquelles ils renvoient le rayonnement optique.

6. Laser selon l'une quelconque des revendications précédentes, dans lequel le second élément de contre-réaction (11) renvoie un rayonnement optique à une pluralité de longueurs d'onde distinctes dans la cavité du laser, de sorte que le laser, en utilisation, produit un effet laser à ladite pluralité de longueurs d'onde distinctes.

7. Laser selon la revendication 6, dans lequel le second élément de contre-réaction (11) comprend une pluralité de réseaux de diffraction de fibre.

8. Laser selon l'une quelconque des revendications précédentes, dans lequel le milieu de gain comprend une diode laser à semiconducteur (2).

9. Laser selon la revendication 8, dans lequel le premier élément de contre-réaction (17) est fourni par une première facette de la diode laser à semiconducteur (2); et une seconde facette (5) de la diode laser à semiconducteur est revêtue d'un revêtement anti-réflexion.

10. Laser selon l'une quelconque des revendications 1 à 7, dans lequel le milieu de gain comprend une fibre (22) dopée avec un élément de terres rares.

11. Laser selon la revendication 10, dans lequel une première extrémité de la fibre dopée (22) est munie d'un réflecteur à large bande comprenant le premier élément de contre-réaction et une seconde extrémité de la fibre dopée présente un faible facteur de réflexion et est reliée à un composant du connecteur optique démontable.

12. Ensemble comprenant un boîtier (1), une diode laser à semiconducteur (2), un moyen de connecteur optique démontable (3) et une certaine longueur de guide d'onde optique (4),
ladite diode laser à semiconducteur (2) comportant une facette plus éloignée du guide d'onde optique (4) qui constitue une premier élément de contre-réaction (17) et une facette plus proche du guide d'onde optique (4) qui est conçue pour présenter un faible facteur de réflexion (5),
un première extrémité dudit guide d'onde optique (4) étant maintenue par le moyen de connecteur optique démontable (3), une seconde extrémité dudit guide d'onde optique (4) étant alignée de façon à recevoir, en utilisation, un rayonnement optique provenant de ladite diode laser à semiconducteur (2), le moyen de connecteur optique démontable convenant à une connexion démontable avec un second élément de contre-réaction sélectif en longueur d'onde afin de former une cavité laser avec le premier élément de contre-réaction.

13. Ensemble comprenant un boîtier (1), une diode laser à semiconducteur (2), un moyen de connecteur optique démontable (3), une certaine longueur de guide d'onde optique (4), et une fibre amorce (10),
ladite diode laser à semiconducteur (2) comportant une facette plus éloignée du guide d'onde optique (4) qui constitue un premier élément de contre-réaction (17), et une facette plus proche dudit guide d'onde optique (4) qui est conçue pour présenter un faible facteur de réflexion (5),
une première extrémité dudit guide d'onde optique (4) étant maintenue par le moyen de connecteur optique démontable (3), une seconde extrémité dudit guide d'onde optique (4) étant alignée de façon à recevoir, en utilisation, un rayonnement optique provenant de ladite diode laser à semiconducteur (2),
ladite fibre amorce (10) comprenant une certaine longueur de fibre optique tamponnée reliée à au moins une extrémité avec un composant d'un connecteur optique démontable (13), la fibre comprenant un réseau de diffraction de fibre, présentant une première sélectivité en longueur d'onde, afin de fournir un second élément de contre-réaction sélectif en longueur d'onde (11),
la fibre amorce étant connectée de façon démontable à la première extrémité dudit guide d'onde optique par ledit moyen de connecteur optique démontable (13) de sorte que, en utilisation, le rayonnement lumineux de la diode laser à semiconducteur (2) amène l'effet laser à se produire entre le premier élément de contre-réaction et le second élément de contre-réaction sélectif en longueur d'onde, la longueur d'onde ou les longueurs d'onde de l'action d'effet laser étant modifiable(s) par l'échange de la fibre amorce (10) avec une seconde fibre amorce comprenant un élément de réseau de diffraction de fibre qui présente une sélectivité en longueur d'onde différente.

14. Ensemble selon soit la revendication 12, soit la revendication 13, dans lequel le guide d'onde optique (4) est de longueur et de souplesse suffisantes pour qu'une perturbation mécanique de la première extrémité du guide d'onde optique ne soit pratiquement pas transmise à la seconde extrémité du guide d'onde optique.

15. Ensemble selon soit la revendication 12, soit la revendication 13, dans lequel le connecteur optique démontable (3) est monté sur le boîtier (1).

16. Ensemble selon l'une quelconque des revendications 13 à 15, dans lequel la fibre amorce (10) comprend une pluralité de réseaux de diffraction de fibre, chaque réseau de diffraction présentant un pas différent.

17. Fibre amorce destinée à être utilisée dans un laser selon l'une quelconque des revendications 1 à 11, comprenant une certaine longueur de fibre optique (12) protégée par une couche tampon (16) et reliée à au moins une extrémité avec un composant d'un connecteur optique démontable (13), la fibre comprenant un réseau de diffraction de fibre (11) qui convient à une utilisation en tant que second élément de contre-réaction sélectif en longueur d'onde dans ledit laser.

18. Fibre amorce selon la revendication 17, dans laquelle la fibre (12) comprend une pluralité de réseaux de diffraction de fibre (11), chaque réseau de diffraction de fibre présentant un pas différent.

19. Réseau de télécommunications comportant des voies de transmission à fibres optiques et une pluralité de lasers couplés optiquement auxdites voies de transmission, caractérisé en ce que chaque laser de ladite pluralité de lasers comprend un laser selon l'une quelconque des revendications 1 à 11.

20. Réseau de télécommunications selon la revendication 19, dans lequel chaque laser de ladite pluralité de lasers comprend des premier et second moyens de connecteur optique démontable, le premier moyen de connecteur optique étant situé entre le milieu de gain et le second élément de contre-réaction, et le second moyen de connecteur optique étant situé entre le second élément de contre-réaction et une fibre de transmission qui réalise l'une des voies de transmission à fibre optique dudit réseau.
